# EUROPEAN PATENT SPECIFICATION

(11) **EP 1 632 537 B1**
(45) Date of publication and mention of the grant of the patent: **13.03.2013**
(21) Application number: 04292125.4
(22) Date of filing: 02.09.2004
(51) Int. Cl.: C09D 5/00, C09D 11/00, C09D 5/03, C09D 7/12

(54) **Method of using hollow sphere polymers**
Verfahren zur Verwendung von hohlen Polymerkugeln
Méthode pour l'usage de sphères creuses polymère

(43) Date of publication of application: 08.03.2006
(60) Divisional application: 10180209.8
(73) Proprietor: ROHM AND HAAS COMPANY, Philadelphia, Pennsylvania 19106-2399 (US)
(72) Inventor: Brown, James T., Bechtelsville, PA 19505 (US); Haigh, John Robert, 06330 Roquefort les Pins (FR); Rufe, Laurel A., Schwenksville, PA 19473 (US)
(74) Representative: Buckley, Guy Julian

(56) References cited:
- EP-A- 0 451 940
- EP-A- 1 158 028
- EP-A- 1 344 803
- EP-A2- 1 092 421
- EP-A2- 1 602 784
- WO-A-94/04603
- WO-A-03/078175
- US-A- 5 360 827

## Description

The present invention relates to a method of using heat resistant hollow sphere polymers having a core stage that has been swollen with a hard or fixed base, in applications in which the hollow sphere polymers are exposed to temperatures of from 100°C to 350°C.

Voided, or hollow polymeric particles are generally prepared by swelling a multi-stage polymer, having a core and a shell, in such a way that one or more voids form in the interior of the hollow polymeric particle. It is well known in the art to utilize such hollow polymeric particles to provide favorable properties, such as brightness, whiteness, opacity, and/or low density. In many cases, the hollow polymeric particles are used to reduce the cost of the final product by replacing or extending pigments, some of which can be costly (for example, titanium dioxide). Hollow polymeric particles are often used in paints, coatings, inks, sunscreens, paper manufacture, and several other arenas. However, their use has tended to be limited to applications involving materials that are manufactured under mild temperature conditions. There are a number of applications involving the high temperature processing of materials, that could benefit from the use of hollow polymeric particles. For example, in those plastic, metal coating, woven, nonwoven, pigment printing, and powder coating applications which involve the use of high temperatures. Hollow polymeric polymers are not conventionally used in such applications, due to the inability of the polymers to withstand high temperatures. Hollow polymeric particles tend to soften, and collapse upon the exposure to high temperature, resulting in the partial or complete loss of the void within the particles. This is disadvantageous because, among other things, the distortion, or lack of the void, impairs the ability of the hollow sphere polymer to scatter light, and thus prevents the hollow sphere polymer from imparting, among other things, opacity. There remains, therefore, a need for a hollow sphere polymer that is able to provide improvements in opacity, even after exposure to high temperatures.

U.S. Patent Application No. 2003/0176535 discloses a heat resistant ink containing a carrier liquid and hollow sphere polymer particles that are crosslinked. However, the patent application does not disclose a method of using a hollow sphere polymer-containing composition having an amine titer, as defined by the F Method, of less than 0.2 meq/g solid, which method includes exposing the composition to temperatures of from 100 °C to 350°C.

U.S. Patent No. 4,594,363 discloses a process for making core/sheath polymer particles containing voids, including the step of swelling, at elevated temperature, the resultant core/sheath polymer particles with fixed or permanent base so as to produce a dispersion of particles which, when dried, contain a microvoid. However, the patent does not disclose a method of using the core/sheath polymer in applications in which the core/sheath polymer particles are exposed to temperatures of from 100°C to 350°C temperatures.

WO-A-94/04603 discloses hollow polymer particles for use as opacifying plastic pigments and methods for making them wherein the polymer particles contain a shell and an acid-free, hydrophilic polymer core such that the core polymer is hydrolysed and swollen at temperatures above the glass transition temperature (Tg) of the polymer after hydrolysis. Paper coatings containing the same polymers are disclosed.

EP-A-1092421 discloses methods for making ultraviolet radiation absorbing compositions comprising a latex copolymer particle, e.g. an acrylic multistage emulsion copolymer, containing a void and having at least 4% polymerised crosslinker monomer in the shell portion of the copolymer.

Applicants have unexpectedly discovered that hollow sphere polymers that have been swollen by a fixed or permanent base are useful for providing at least one of, improved whiteness, brightness or opacity when used in applications in which the hollow sphere polymer is subjected to high temperatures, such as, for example plastics, metal coatings, wovens, nonwovens, pigment printing, and powder coatings.

The present invention is as set out in the accompanying claims.

The present invention is a method of using a heat resistant hollow sphere polymer for imparting lightness, brightness or opacity to a substrate, comprising the steps of: (a) providing a composition comprising a dispersion of hollow sphere polymers, wherein said hollow sphere polymer is optionally crosslinked, wherein said hollow sphere polymer has a core stage that has been swollen by a fixed or permanent base, (b) contacting said composition containing said hollow sphere polymer with a woven or non-woven substrate; and (c) exposing said composition containing said hollow sphere polymer to temperatures of from 100°C to 350°C.

Applicants have unexpectedy discovered that hollow sphere polymers having a core stage that has been swollen with a hard or fixed base, are able to resist high temperatures. Thus, they are able to impart at least one of lightness, brightness, or opacity, to articles to which they are applied or incorporated. The method of the present invention is directed toward the use of such hollow sphere polymers in applications in which the hollow sphere polymer is exposed to temperatures of from 100°C to 350°C.

The first step of the method is the provision of a composition containing a dispersion of hollow sphere polymers whose core has been swollen by a hard or fixed base. In the preferred embodiment, the hollow sphere polymer dispersion has an amine titer, as determined by the F Method, of less than 0.2 meq/g solid. The "F Method" is defined as follows. A first titration of the hollow sphere polymer dispersion is conducted. A weight of the dispersion, equivalent to nominally 0.6 grams of hollow sphere polymer solid, is diluted with 5 grams of a 10% aqueous solution of potassium chloride, 2 grams of a non-ionic surfactant, such as Triton™ X-405 (manufactured by Dow Chemical, located in Midland, Michigan), and 75 grams of tetrahydrofuran. The pH of the sample is adjusted with 0.5 N aqueous hydrochloric acid to a pH of approximately 2.5. The sample is then titrated with 0.5 N aqueous sodium hydroxide. The milliequivalents of basic titrant required to change the pH from 8, to the high pH titration end-point, divided by the actual hollow sphere polymer solids content of the first titration sample, is recorded as the observed titer for the first titration. A second titration is conducted in the same manner as the first titration, on the same composition as was titrated in the first titration, with the exception that the dispersion is deionized with cation exchange resin prior to the dilution of the dispersion with the potassium chloride, surfactant and tetrahydrofuran, as follows. The hollow sphere polymer dispersion is diluted 50:50 with deionized water. After dilution, the material is treated with an excess of cation exchange resin (e.g. Amberlite™ IRN-77, manufactured by Rohm and Haas Company, located in Philadelphia, Pennsylvania). When cation exchange is complete the cation exchange resin beads are filtered off. The solids of the cation exchanged dispersion (i.e. the filtrate), is determined gravimetrically. The material is then ready for titration, as described above. The observed titer for this second titration is the milliequivalents of basic titrant required to change the pH from 8, to the high pH titration end-point, divided by the actual hollow sphere polymer solids content of the second titration sample. The difference between the observed amine titer of the second titration and the observed amine titer of the first titration is calculated to provide the "amine titer".

In a preferred embodiment of the invention, the hollow sphere polymer has been made by forming a multi-stage polymer having a core stage that is encapsulated by a shell stage, and then swelling the multi-stage polymer by contacting it with a fixed or permanent base, to form the hollow sphere polymer. Hollow sphere polymers of this type are well known in the art, and commercially available.

The core stage polymer is an emulsion polymer that has been formed by polymerizing at least one mono-ethylenically unsaturated monomer containing acid functionality. The core stage polymer is prepared by emulsion homo-polymerization of the acid-containing monomer, or by co-polymerization of the acid-containing monomer with at least one different monomer. Suitable mono-ethylenicially unsaturated monomers containing acid functionality, useful for making the core stage polymer, include, for example, monomers containing at least one carboxylic acid group including acrylic acid, methacrylic acid, acryloxypropionic acid, (meth)acryloxypropionic acid, itaconic acid, aconitic acid, maleic acid or anhydride, fumaric acid, crotonic acid, monomethyl maleate, monomethyl fumarate, and monomethyl itaconate; also contemplated is the use of terminally unsaturated acid-containing oligomers such as, for example, are taught in U.S. Patents No. 5,710,227 and 6,046,278 and EP 1010706, and including comb/graft, block, and mixed block oligomers. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. Acrylic acid and methacrylic acid are preferred.

In general, core co-polymers containing at least about 5%, preferably at least 10%, by weight of the acid mers have practical swellability for the purposes of the present invention. However, there may be instances where, because of the hydrophobicity of certain co-monomers, the co-polymer may require more, or less, than 5 weight percent of acid-containing monomer. As noted above, the core stage polymer may be formed by homo-polymerization of an acid-containing monomer. Thus, the invention includes a core containing 100% of the emulsion polymerized acid-containing monomer. A preferred maximum quantity of acid-containing monomer is about 70%, by weight, of the total core stage monomers.

In a preferred embodiment, the acid-containing monomer is co-polymerized with one or more nonionic mono-ethylenically unsaturated monomers. In one embodiment, the core stage polymer is formed by co-polymerizing from 5 to 100%, preferably from 20% to 60%, and more preferably, from 30% to 50%, by weight, based on the weight of the core stage polymer, of at least one ethylenicially unsaturated monomer containing acid functionality, and from 0 to 95% by weight, based on the weight of the core stage polymer, of at least one nonionic mono-ethylenically unsaturated monomer. Suitable nonionic mono-ethylenically unsaturated monomers for making the core stage polymer include styrene, α-methyl styrene, p-methyl styrene, t-butyl styrene, vinyltoluene, ethylene, vinyl acetate, vinyl chloride, vinylidene chloride, (meth)acrylonitrile, (meth)acrylamide, (C₁-C₂₀) alkyl or (C₃-C₂₀) alkenyl esters of (meth)acrylic acid, such as methyl (meth)acrylate, ethyl (meth)acrylate, butyl (meth)acrylate, 2-ethylhexyl (meth)acrylate, hydroxyethyl(meth)acrylate, hydroxypropyl(meth)acrylate, benzyl (meth)acrylate, lauryl (meth)acrylate, oleyl (meth)acrylate, palmityl (meth)acrylate, stearyl (meth)acrylate and the like.

The core stage polymer may optionally contain less than 20% by weight, preferably from 0.1 to 3% by weight, based on the total weight of the core, of polyethylenically unsaturated monomer, wherein the amount used is generally approximately directly proportional to the amount of mono-ethylenically unsaturated acid-containing monomer used. In other words, as the relative amount of mono-ethylenically unsaturated acid-containing monomer increases, it is acceptable to increase the level of polyethylenically unsaturated monomer. Alternatively, the core polymer may contain from 0.1 to 60 % by weight, based on the total weight of the core polymer, of butadiene.

Suitable polyethylenically unsaturated monomers include co-monomers containing at least two addition polymerizable vinylidene groups and are alpha-beta ethylenically unsaturated monocarboxylic acid esters of polyhydric alcohols containing 2-6 ester groups. Such co-monomers include alkylene glycol diacrylates and dimethacrylates, such as for example, ethylene glycol diacrylate, ethylene glycol dimethacrylate, 1,3-butylene glycol diacrylate, 1,4-butylene glycol diacrylate propylene glycol diacrylate and triethylene glycol dimethylacrylate; 1,3-glycerol dimethacrylate; 1,1,1-trimethylol propane dimethacrylate; 1,1,1-trimethylol ethane diacrylate; pentaerythritol trimethacrylate; 1,2,6-hexane triacrylate; sorbitol pentamethacrylate; methylene bis-acrylamide, methylene bis-methacrylamide, divinyl benzene, vinyl methacrylate, vinyl crotonate, vinyl acrylate, vinyl acetylene, trivinyl benzene, triallyl cyanurate, divinyl acetylene, divinyl ethane, divinyl sulfide, divinyl ether, divinyl sulfone, diallyl cyanamide, ethylene glycol divinyl ether, diallyl phthalate, divinyl dimethyl silane, glycerol trivinyl ether, divinyl adipate; dicyclopentenyl (meth)acrylates; dicyclopentenyloxy (meth)acrylates; unsaturated esters of glycol monodicyclopentenyl ethers; allyl esters of mono- and dicarboxylic acids having terminal ethylenic unsaturation including allyl (meth)acrylate, diallyl maleate, diallyl fumarate, diallyl itaconate and the like.

The shell stage of the hollow sphere polymer of this invention has a relatively moderate to high glass transition temperature (Tg). Preferably, the outermost shell stage polymer Tg is greater than 25°C, more preferably greater than 50°C, even more preferably greater than 70°C, and most preferably greater than 90°C, as calculated by the Fox Equation (T.G. Fox, Bull. Am. Physics Soc., Volume 1, Issue No. 3, page 123 (1956)). That is, for calculating the Tg of a co-polymer of monomers M1 and M2,
1/Tg(calc.)= w(M1)/Tg(M1) + w(M2)/Tg(M2) , wherein
Tg(calc.) is the glass transition temperature calculated for the co-polymer
w(M1) is the weight fraction of monomer M1 in the co-polymer
w(M2) is the weight fraction of monomer M2 in the co-polymer
Tg(M1) is the glass transition temperature of the homopolymer of M1
Tg(M2) is the glass transition temperature of the homopolymer of M2,
all temperatures being in °K.

The shell stage polymer is the product of emulsion polymerizing a shell stage monomer system in the presence of the core stage polymer. The monomers used, and the relative proportions thereof in the shell stage polymer, should be such that the shell stage polymer permits permeation of a fixed or permanent base. It is preferred that the shell stage monomer system be all acrylic. However, in a particularly preferred embodiment, the shell stage polymer contains as co-polymerized units, butyl methacrylate, methyl methacrylate, and from about 1 to about 10% by weight methacrylic acid.

In one embodiment of the invention, the core stage polymer contains co-polymer, having as co-polymerized units from 5 to 100%, based on the weight of the core stage polymer, of at least one ethylenically unsaturated monomer containing acid functionality, and from 0 to 95% by weight, based on the weight of the core stage polymer, of at least one nonionic mono-ethylenically unsaturated monomer; and the shell stage polymer is formed by polymerizing from about 90% by weight to about 99.9%, by weight, based on the total weight of shell stage polymer, of at least one nonionic mono-ethylenically unsaturated monomer, and from about 0.1 % by weight to about 10% by weight, based on the total weight of shell stage polymer, of an acid-functional mono-ethylenically unsaturated monomer. In this embodiment, when the particle size of the core stage polymer is from about 130 nm to about 2.0 microns, the acid-functional mono-ethylenically unsaturated monomer is preferably added to the polymerization of the shell stage polymer over 100% of the total shell stage monomer feed, based on the total weight of the shell stage monomer feed, more preferably over the first 50% of the feed, even more preferably over the first 25% of the feed, and most preferably over the first 10% of the feed. When the particle size of the core stage polymer is less than about 130 nm, the acid-functional mono-ethylenically unsaturated monomer is preferably added to the polymerization of the shell stage polymer over the first 50% of the total shell stage monomer feed, based on the total weight of the shell stage monomer feed, more preferably over the first 25% of the feed, and most preferably over the first 10% of the feed.

The hollow sphere polymer system may contain a shell stage monomer system containing at least 1% by weight acid functional monomer, the balance of which may be a nonionic mono-ethylenically unsaturated co-monomer, such as those mentioned herein-above for the core stage polymer. The preferred amount of acid functional monomer in the monomer system used to prepare the shell stage polymer is from 5 to 10% by weight when solvent is not used, and from about 1 to 2% by weight when solvent is used. Alternatively, the hollow sphere polymer system may involve the swelling of the hollow sphere polymer in the presence of a solvent.

The use of solvent assists in the penetration of the shell by the fixed or permanent base. Suitable amounts of solvent are from 1 to 100 parts by weight, based on 100 parts by weight hollow sphere polymer, preferably from 5-10 parts by weight. Suitable solvents are any which will plasticize the shell, for example, hexanol, ethanol, 3-hydroxy-2,2,4-trimethylpentyl isobutyrate, toluene, mixtures of solvents, and the like. The solvent can be added either before, after, or with the addition of the base. In certain cases the shell stage monomer system itself can function as the solvent for the shell stage polymer.

Within the scope of the invention are, among others, shell stage polymers which completely encapsulate the core stage polymer; shell stage polymers which substantially, but incompletely encapsulate the core stage polymer; polymers that are swollen to provide a particle with at least one pore communicating between the surface of the particle and the interior, (i.e. core or void), of the particle; polymer particles having multiple cores; multistaged polymers wherein the core polymer is a precursor to the acid-functionality containing core polymer of this invention and is subsequently converted to the acid-functionality containing core polymer of this invention by means such as hydrolysis of the core polymer according to the teachings of US Patent Nos. 5,041,464; 5,157,084; and 5,216,044, whether before, during, or after shell polymer formation, and the core polymer is contacted with a fixed or permanent base, during or after the hydrolysis.

As noted herein-above, Applicants have unexpectedly discovered that hollow sphere polymers that have been swollen by a fixed or permanent base are able to withstand temperatures of from 100°C to 180°C , preferably from 120°C to 180°C, more preferably from 150°C to 180°C. Applicants have additionally discovered that the hollow sphere polymers are able to withstand even higher temperatures, generally from 150°C to 350°C, where the hollow sphere polymer contains a crosslinked polymer. Thus, in one embodiment of the invention, at least one of the polymer stages, preferably the shell stage polymer, is crosslinked. Crosslinking may occur during polymerization to form the core and/or shell stage polymer, after polymerization to form the core and/or shell stage polymer, or a combination thereof. In those embodiments of the invention where crosslinking is utilized, the composition of the invention may be a curable composition. By "curable" is meant herein, that the composition can be caused to experience a chemical change, optionally via crosslinking, that is sufficient to alter the properties of the polymer in the composition.

The crosslinking level is preferably from 2 mole% to 70 mole%, more preferably from 5 mole% to 50 mole%, based on the total mole of monomer used in the hollow sphere polymer. Crosslinking in the shell can be derived from the use of one or more polyethylenically unsaturated monomers. Suitable polyethylenically unsaturated monomers include those described herein-above for the core and shell stage polymers. Alternatively, crosslinking of the shell stage polymer may be derived from the use of one or more multifunctional monomers, to provide post-polymerization crosslinking of the shell. The multifunctional monomers contain at least one functional group capable of vinyl-co-polymerization, and at least one functional group capable of reaction with suitable reactive molecules. Suitable reactive molecules include, for example, amines, diamines, amino acids and aminoalkyltialkoxysilanes; optionally followed by the addition of other reactive molecules, such as aldehydes (for example, formaldehyde) dialdehydes (for example, glutaric dialdehyde), hydrazines and dihydrazines (for example, succinic dihydrazine) to form post-polymerization crosslinked sol-gels. Examples of suitable functional groups and reactive molecules for post-polymerization crosslinking of the shell stage polymer, as well as multifunctional monomers suitable for post-polymerization crosslinking, are illustrated, without limitation, in European Patent Application EP 1092421. Preferred crosslinkers include divinyl benzene, allyl methacrylate and acetoacetoxy ethyl methacrylate.

The multi-stage polymer particles containing the core and shell stage polymers are prepared by sequential emulsion polymerization methods, which are well known in the art, for example as described in United State Patent No. 4,594,363. By "sequential emulsion polymerization" is meant herein that the homo- or co-polymers of one stage of the polymer are prepared in aqueous medium, by an emulsion polymerization process, in the presence of the dispersed polymer particles of a polymer stage previously formed by emulsion polymerization, such that the previously formed emulsion polymers are increased in size by deposition thereon of emulsion polymerized product of one, or more, successive monomer charges that are introduced into the medium containing the dispersed particles of the preformed emulsion polymer. Each stage of the hollow sphere polymer may be made in a single stage, or step, of the sequential polymerization, or may be made by a plurality of steps in sequence.

The sequential emulsion polymerization may involve use of a seed polymer. The term "seed" polymer is used to refer to an aqueous emulsion polymer dispersion, which may be the dispersion containing the first-formed polymer stage, or it may be the emulsion polymer dispersion obtained at the end of any subsequent stage, except the final stage of the sequential polymerization. Thus, a core stage polymer which is intended to be encapsulated by one, or more, subsequent stages of emulsion polymerization, may itself be termed a seed polymer for the next stage. Likewise, a seed polymer may be utilized to form the nuclei on which the core stage polymer is formed.

A water-soluble free radical initiator may be utilized in the aqueous emulsion polymerization. Suitable water-soluble free radical initiators include hydrogen peroxide; tert-butyl peroxide; alkali metal persulfates such as sodium, potassium and lithium persulfate; ammonium persulfate; and mixtures of such initiators with a reducing agent. Reducing agents include: sulfites, such as alkali metal metabisulfite, hydrosulfite, and hyposulfite; sodium formaldehyde sulfoxylate; and reducing sugars such as ascorbic acid and isoascorbic acid. The amount of initiator is preferably from 0.01 to 3 % by weight, based on the total amount of monomer and in a redox system the amount of reducing agent is preferably from 0.01 to 3 % by weight based on the total amount of monomer. The initiation temperature may be in the range of from about 10°C to about 100°C. In the case of the persulfate systems, the temperature is preferably in the range of from 60°C to 90°C. In the redox system, the temperature is preferably in the range of from 30°C to 70°C. The type and amount of initiator may be the same or different in the various stages of the multi-stage polymerization.

One or more nonionic or anionic emulsifiers, or surfactants, may be used, either alone or together. Examples of suitable nonionic emulsifiers include tert-octylphenoxyethylpoly(3 9)-ethoxyethanol, dodecyloxypoly(10)ethoxyethanol, nonylphenoxyethyl-poly(40)ethoxyethanol, polyethylene glycol 2000 monooleate, ethoxylated castor oil, fluorinated alkyl esters and alkoxylates, polyoxyethylene (20) sorbitan monolaurate, sucrose monococoate, di(2-butyl)phenoxypoly(20) ethoxyethanol, hydroxyethylcellulosepolybutyl acrylate graft co-polymer, poly(ethylene oxide)poly(butyl acrylate) block co-polymer, block co-polymers of propylene oxide and ethylene oxide, 2,4,7,9-tetramethyl-5-decyne-4,7-diol ethoxylated with 30 moles of ethylene oxide, N-polyoxyethylene(20)lauramide, N-lauryl-N-polyoxyethylene(3)amine and poly(10)ethylene glycol dodecyl thioether. Examples of suitable anionic emulsifiers include sodium lauryl sulfate, sodium dodecylbenzenesulfonate, potassium stearate, sodium dioctyl sulfosuccinate, sodium dodecyldiphenyloxide disulfonate, nonylphenoxyethylpoly(1)ethoxyethyl sulfate ammonium salt, sodium styrene sulfonate, sodium dodecyl allyl sulfosuccinate, linseed oil fatty acid, sodium or ammonium salts of phosphate esters of ethoxylated nonylphenol, sodium octoxynol-3-sulfonate, sodium cocoyl sarcocinate, sodium 1-alkoxy-2-hydroxypropyl sulfonate, sodium alpha-olefin (C₁₄-C₁₆)sulfonate, sulfates of hydroxyalkanols, tetrasodium N-(1,2-dicarboxy ethyl)-N-octadecylsulfo-succinamate, disodium N-octadecylsulfosuccinamate, disodium alkylamido polyethoxy sulfosuccinate, disodium ethoxylated nonylphenol half ester of sulfosuccinic acid and the sodium salt of tert-octylphenoxyethoxypoly(39) ethoxyethyl sulfate. The surfactant is generally used at a level of from 0 to 3 % based on the weight of the multi-stage polymer. The surfactant can be added prior to the addition of any monomer charge, during the addition of a monomer charge, or a combination thereof. In certain monomer/emulsifier systems for forming the shell, the tendency to produce gum or coagulum in the reaction medium may be reduced or prevented by the addition of about 0.05% to about 2.0% by weight, based on total weight of the shell polymer, of emulsifier, without detriment to the deposition of the polymer formed on the previously formed core particles.

By carrying out the emulsion polymerization while maintaining low levels of emulsifier, the subsequent stages of polymer-formation deposit on the existing dispersed polymer particles resulting from the preceding step or stage. As a general rule, the amount of emulsifier should be kept below that corresponding to the critical micelle concentration for a particular monomer system, but while this limitation is preferable and produces a unimodal product, it has been found that in some systems the critical micelle concentration of the emulsifier may be exceeded somewhat without the formation of an objectionable or excessive number of dispersed micelles or particles. The purpose for keeping the concentration of emulsifier low is to control the number of micelles during the various stages of polymerization so that the deposition of the subsequently formed polymer in each stage occurs upon the dispersed micelles or particles formed in the previous stages, that.

The viscosity-average molecular weight of the polymer formed in a given stage may range from 100,000 to several million molecular weight. Where a chain transfer agent is used, the molecular weight can be lower than 100,000. When 0.1% by weight to 20% by weight, based on the weight of the monomer, of a polyethylenically unsaturated monomer is used in making the core, the molecular weight is increased whether or not crosslinking occurs. The use of the polyethylenically unsaturated monomer reduces the tendency of the core polymer to dissolve when the multistaged polymer is treated with a swellant for the core. If it is desired to produce a core having a molecular weight in the lower part of the range, such as from 500,000 down to as low as about 20,000, it is frequently most practical to do so by avoiding the polyethylenically unsaturated monomers and using a chain transfer agent, such as for example, alkyl mercaptans, such as sec-butyl mercaptan, instead, preferably in quantities of from 0.05 wt% to 2 wt% by weight, or more, based on the weight of total monomer.

The amount of polymer deposited to form the shell stage polymer is generally sufficient to provide an overall size of the multistage polymer particle of from 70 nm to 4.5 microns, preferably from 100 nm to 3.5 microns, more preferably from 200 nm to 2.0 microns, in unswollen condition, whether the shell polymer is formed in a single stage, or in a plurality of stages. In order to minimize the dry density of the final product, it is preferable to deposit only as much shell polymer as is needed to fully encapsulate the core.

The multi-stage polymer containing the core and shell stage polymers is swollen when the particles are subjected to a fixed or permanent base capable of swelling the core, resulting in the formation of the hollow sphere polymer. Preferably, the resulting hollow sphere polymer has a void fraction of from 20% to 70%, preferably 30% to 55%. By "void fraction" is meant herein the volume of the void within the polymer particle, divided by the total volume of the voided polymer particle. The swelling, or expansion, of the core may involve partial merging of the outer periphery of the core into the pores of the inner periphery of the shell and/or partial enlargement or bulging of the shell and the entire particle overall. Suitable swelling agents are those fixed or permanent bases which, in the presence of the multistage emulsion polymer, are capable of permeating the shell and swelling the core. By "fixed or permanent base" is meant herein a nonvolatile hard base, such as a metal hydroxide such as, for example, sodium hydroxide, potassium hydroxide, lithium hydroxide, strontium hydroxide, barium hydroxide. Preferred are sodium hydroxide and potassium hydroxide. The fixed or permanent base differs from "volatile bases", such as ammonia, ammonium hydroxide, amines, salts of weak acids, which to some greater or lesser degree evaporate from the emulsion either at ambient temperatures or upon drying. The volatile bases typically have a pKb<7 (in water at 25 °C). Solvents, such as, for example, ethanol, hexanol, octanol, Texanol™ solvent (manufactured by Rohm and Haas Company, located in Philadelphia, Pennsylvania), and those described in U.S. Patent 4,594,363, may be added to aid in fixed or permanent base penetration.

The composition containing the hollow sphere polymer is contacted with a woven or nonwoven substrate. The composition containing the hollow sphere polymer is then exposed to temperatures of from 100°C to 350°C, preferably from 120°C to 350°C, more preferably from 125°C to 350°C. The time during which the exposure occurs depends upon the temperature of the exposure, and the particular end-use. Likewise, the exposure temperature depends on the exposure duration and the end-use.

Exposure of the composition to temperatures of from 100°C to 350°C effects partial or complete drying, and where a curable composition is used, it effects partial or complete drying or drying and curing. The duration, and temperature, of the exposure will affect, among other things, the rate of drying, ease of processing or handling, and property development of the substrate that has been contacted by the composition. The drying and curing functions can be effected in two or more distinct steps, if desired. For example, the curable composition can be first heated at a temperature, and for a time, sufficient to substantially dry, but not to substantially cure the composition, and then heated for a second time, at a higher temperature, and/or for a longer period of time, to effect curing. Such a procedure, referred to as "B-staging", can be used to provide materials which can be cured at a later stage, with or without forming or molding into a particular configuration concurrent with the curing process.

In one embodiment of the invention, the hollow sphere polymers are used for heat-resistant fabrics, either wovens or nonwovens. By "wovens", herein is meant herein fabrics made by interlacing or interweaving threads, or strips of material, or other elements into a whole. By "nonwovens", herein is meant fabrics that are composed of fibers that are consolidated by purely mechanical means such as, for example, by entanglement caused by needle-punching, by an air-laid process, or by a wet-laid process; by chemical means, such as, for example, treatment with a polymeric binder; or by a combination of mechanical and chemical means before, during, or after nonwoven fabric formation. Examples of nonwovens include, for example, interlinings for clothing and the like, dry wipes, wet wipes, backcoating for drapes, flocking, wallcoverings, including cellulosic and glass fiber wallcoverings, industrial non-wiovens, nonwovens containing heat-resistant fibers, such as, aramid fibers; ceramic fibers; metal fibers; carbon fibers; polyimide fibers; certain polyester fibers; rayon fibers; rock wool; and glass fibers, and the like. In this embodiment of the invention, the heat resistant fabric is contacted with the composition containing the hollow sphere polymers, and then exposed to temperatures of from 120°C to 175°C, preferably 140°C to 160°C.

In the invention, the hollow sphere polymer-containing composition is contacted with a substrate. The methods by which the contact is made include, for example, coating, including, for example, roll coating, curtain coating, and air or airless spraying; sizing; padding; saturating; bonding; beater deposition; coagulation, combinations thereof, and the like. Thus, the composition may be located on or within the substrate, or a combination thereof.

The hollow sphere polymers may be used for pigment printing. By "pigment printing" is meant herein printing on fabric by applying a printing paste, or the like, to the fabric through perforated screens, forming patterns on the fabric. In this embodiment, the printing paste is mixed with the composition containing the hollow sphere polymers, and then contacted with the fabric. After being contacted with the composition containing the hollow sphere polymers, the imprinted fabric is exposed to temperatures of from120°C to 180°C, preferably from 140° C to 160°C.

The following examples illustrate specific aspects and particular embodiments of the invention which, however, in not to be construed as limited thereby.

### Hollow Sphere Polymer Performance for Wovens and Nonwovens

### Comparative Example 1:

50g of a volatile-base-swollen hollow sphere polymer, Ropaque™ HP 1055 (manufactured by Rohm and Haas Company, located in Philadelphia, Pennsylvania), was blended with 1g of a 1% solids dilute solution of a binder Rhoplex™ B-15 (manufactured by Rohm and Haas Company, located in Philadelphia, Pennsylvania), under agitation. The blended material was then applied on a Mylar sheet, using a wire wound rod (# 6). The product was then dried in an oven for 1 minute at temperatures ranging from 80°C to 200°C. The opacity of the dried film was determined by measuring the reflectance of the dried film, as a function of drying temperature.

### Example 2 (Reference):

Example 1 was repeated, except that Ropaque™ HP 1055 was replaced with a fixed base-swollen hollow sphere polymer, Ropaque™AF 1055 (manufactured by Rohm and Haas Company, located in Philadelphia, Pennsylvania).

### Example 3 (Reference):

Example 1 was repeated, except that Ropaque™ HP 1055 was replaced with a fixed base-swollen, crosslinked, hollow sphere polymer, Sample A. The Sample A was prepared by incorporating 4% of di-vinyl benzene during the polymerization process of Ropaque™AF 1055.

**Table 1.**

| | **Comp. Example 1** | **Example 2 (Reference)** | **Example 3 (Reference)** |
|---|---|---|---|
| Hollow sphere polymer (HSP) | Ropaque™ HP 1055 | Ropaque™ AF 1055 | Sample A (crosslinked Ropaque™ AF 1055) |
| HSP swelling base | volatile | fixed | fixed |

| **Temperature °C** | **Reflectance (%)** | | |
|---|---|---|---|
| 81 | 73.68 | 75.32 | 73.18 |
| 100 | 73.58 | 74.02 | 74.74 |
| 125 | 72.28 | 73.04 | 74.18 |
| 150 | 56.58 | 71.98 | 72.82 |
| 175 | 43.52 | 65 | 71 |
| 200 | 10.76 | 56.78 | 71.26 |

| | | | |
|---|---|---|---|
| NOTE: Comp. Example = comparative example | | | |

The fixed base-swollen hollow sphere polymer showed better opacity at, and above, the curing temperatures typically used for woven and non-woven applications (about 150°C), demonstrating it has added utility, at high temperature, compared to the volatile base-containing hollow sphere polymers. As demonstrated by the results, the use of a difunctional monomer allows drying and cure of polymer films at even higher temperatures, without loss of opacity.

### Comparative Example 4:

A volatile base-swollen hollow sphere polymer, Ropaque™ HP 1055, was blended with a binder, Primal™ SF 016 (manufactured by Rohm and Haas Company, located in Philadelphia, Pennsylvania), under moderate agitation, at a ratio of 30 to 70 parts by weight. The blend was applied over black float glass, using a drawdown bar with a 200µ blade opening, and dried for 8 minutes in a recirculating air oven at temperatures ranging from room temperature to 150°C. The opacity of the dried film was determined by measuring the reflectance of the film using a Byk Gardner reflectometer (angle 45/0).

### Example 5 (Reference):

Example 4 was repeated, except that Ropaque™ HP 1055 was replaced with a fixed base-swollen hollow sphere polymer, Ropaque™AF 1055.

**Table 2.**

| | **Comp. Example 4** | **Example 5 (Reference)** |
|---|---|---|
| Hollow sphere polymer (HSP) | Ropaque™ HP 1055 | Ropaque™ AF 1055 |
| HSP swelling base | volatile | fixed |

| **Temperature °C** | **Reflectance (%)** | |
|---|---|---|
| 23 (room) | 61.9 | 73.5 |
| 120 | 37.7 | 51.2 |
| 135 | 6 | 47.1 |
| 150 | 8.5 | 44 |

This results demonstrate the improved opacity retention at the drying and cure temperatures typically used in woven and non-woven applications (about 150°C).

### Example 6

A blend of a fixed base-swollen hollow sphere polymer, Ropaque™ AF 1055, with a binder, Primal™ E-358 ER (manufactured by Rohm and Haas Company, located in Philadelphia, Pennsylvania), was prepared to demonstrate the opacity that can be obtained in a non-woven application for industrial wipes. The blend was prepared by adding, under agitation, the components described in Table 3.

A polyester non-woven substrate (26 g/m2) was impregnated with the blended material with a Mathis calendar, and the sample was cured in a Werner Mathis forced air circulation oven at 150°C for 3 minutes. The opacity of the sample was measured using a Technibrite TB1C. The tensile strength of the sample was measured using an MTS Tensile Tester at a pull speed of 10 cm/min in the cross (cd) and machine (md) directions of the non-woven substrate.

### Comparative Example 7:

Example 6 was repeated, except that no Ropaque™ AF 1055 was added to the blend.

### Comparative Example 8:

Example 6 was repeated, except that Ropaque™ AF 1055 was replaced with a titanium dioxide (TiO2) slurry. The TiO2 slurry was dispersed with a Cowles blade for 15 minutes, and had the following composition:

| | |
|---|---|
| Tioxide™ TR-92 | 69.5% |

(manufactured by Huntsman Tioxide, located in Billingham, United Kingdom)

| | |
|---|---|
| Natrosol ™ 250HHR | 0.5% |

(manufactured by Hercules, Aqualon Division located in Rijswijk, the Netherlands)

| | |
|---|---|
| Potassium tripolyphosphate | 0.5% |
| Triton™ CF 10 | 0.02% |

(manufactured by Dow Chemical, located in Midland, Michigan)

| | |
|---|---|
| Foammaster™ NXZ | 0.1% |

(manufactured by Cognis, located in Dusseldorf, Germany)

| | |
|---|---|
| Water | 29.4% |

**Table 3.**

| **Raw material** | **Example 6** | **Comp. Example 7** | **Comp. Example 8** |
|---|---|---|---|
| | **(g)** | **(g)** | **(g)** |
| Primal™ E-358 ER | 65 | 80 | 75 |
| Ropaque™ AF 1055 (fixed base-swollen HSP) | 15 | 0 | 0 |
| TiO2 slurry | 0 | 0 | 5 |
| Water | 200 | 200 | 200 |
| Total | 280 | 280 | 280 |
| Add on (%) | 27.4 | 30.6 | 28.4 |
| Opacity | 42 | 36.4 | 42.4 |
| Tensile Strength (N/inch) - ¹md | 34 | 37 | 36 |
| Tensile Strength (N/inch) - ²cd | 7.5 | 9 | 8.5 |

| | | | |
|---|---|---|---|
| 1. md = machind direction | | | |
| 2. cd = cross direction | | | |

This examples demonstrate utility of the fixed base-swollen hollow sphere polymers for TiO2 replacement; the benefit of ease of processing, because the TiO2 slurry requires preparation by dispersion, and TiO2 sediments rapidly when blended with low solids low viscosity samples used in impregnation. The data also shows that the use of hollow sphere polymer does not lead to a notable loss in mechanical properties such as tensile strength.

### Example 9:

A fixed base-swollen hollow sphere polymer, Ropaque™ AF 1055 was blended with a binder, Primal™ ECO 16 (manufactured by Rohm and Haas Company, located in Philadelphia, Pennsylvania), at a ratio of 20 parts hollow sphere polymer to 80 parts binder. The blend was then diluted with water to control the polymer add-on to the non-woven substrate. The diluted formulation was used to impregnate a light weight polyester non-woven (26 g/m2), using a Mathis calendar, to give a polymer add on of 40%. The sample was then cured in a Werner Mathis forced air circulation oven, at temperatures ranging from 120°C to 200°C, for 3 minutes. The amount of polymer add-on was determined by weighing. The opacity of the impregnated non-woven was measured using a Technibrite TB1C.

### Comparative Example 10:

Example 9 was repeated, except that Ropaque™ AF 1055 was replaced with a volatile base-swollen hollow sphere polymer, Ropaque™HP 1055

**Table 4.**

| | **Example 9** | **Comp. Example 10** |
|---|---|---|
| Hollow sphere polymer (HSP) | Ropaque™ AF 1055 | Ropaque™ HP 1055 |
| HSP swelling base | fixed | volatile |

| **Temperature (°C)** | **Reflectance (%)** | |
|---|---|---|
| Room T | 47.11 | 46.77 |
| 120 | 44.94 | 43.38 |
| 140 | 44.32 | 41.92 |
| 160 | 44.98 | 36.31 |
| 180 | 44.6 | 37.88 |
| 200 | 41.91 | 35.22 |

The results show that the fixed base-swollen hollow sphere polymer has greater opacity than the volatile base-swollen hollow sphere polymer, when heated to >140°C , a typical cure temperature for woven and non-woven applications, such as dry wipes.

### Examples 11-13

Three formulations were prepared, the first containing no opacifier (Comp. Example 11); the second containing a fixed base-swollen hollow sphere polymer, Ropaque™ AF 1055 (Example 12); and the third containing a volatile base-swollen hollow sphere polymer, Ropaque™ Ultra (manufactured by Rohm and Haas Company, located in Philadelphia, Pennsylvania) (Comp. Example 13). The composition of each of the three formulations is listed in Table 5. The formulations were used to impregnate Whatman paper n°4, using a Mathis calendar. The samples were then cured in a Werner Mathis forced air circulation oven, at temperatures of 100°C and 150°C, for 3 minutes. The amount of polymer add-on was determined by weighing, and the opacity of the impregnated articles was measured using a Technibrite TB1C. To determine the water resistance, the samples were tested by the Cobb method, with water uptake expressed as a %. The effect of the hollow sphere polymers on stiffness was evaluated using a Handle-O-Meter.

**Table 5.**

| **Raw material** | **Comp. Example 11 (g)** | **Example 12 (g)** | **Comp. Example 13 (g)** |
|---|---|---|---|
| Primal™ 322 M | 100 | 70 | 70 |
| Ropaque™ AF 1055 (fixed base-swollen HSP) | 0 | 30 | 0 |
| Ropaque™ Ultra (volatile base-swollen HSP) | 0 | 0 | 30 |
| Water | 200 | 200 | 200 |
| Total | 300 | 300 | 300 |

| **Properties** | | | |
|---|---|---|---|
| Add on % | 14.1 | 14.3 | 13.3 |
| Results at 100°C cure temperature | | | |
| Cobb(1 min)% | 142.4 | 108.5 | 103.5 |
| Opacity | 79 | 84.8 | 86.3 |
| Handle | 814 | 758 | 766 |

| Results at 150°C cure temperature | | | |
|---|---|---|---|
| Cobb (1 min) % | 39.9 | 23.2 | 23.1 |
| Opacity | 79.2 | 83.6 | 83.7 |
| Handle | 778 | 770 | 776 |
| Delta opacity (100°C-150°C) | +0.2 | -1.2 | -2.7 |

| | | | |
|---|---|---|---|
| NOTE: Primal™ 322 M is manufactured by Rohm and Haas Company, located in Philadelphia, Pennsylvania. | | | |

The results show the fixed base-swollen hollow sphere polymer loses less opacity than a volatile base-swollen hollow sphere polymer, when heated to 150°C , the typical cure temperature for woven and non-woven applications, such as wall coverings. Other key properties such as Cobb and stiffness are not affected negatively, and in some cases positively affected (Cobb), by the presence of fixed base-swollen hollow sphere polymers.

### Hollow Sphere Polymer Performance for Pigment Printing

### Examples 14-15

Two pigment printing formulations were prepared by mixing the raw materials listed in Table 6, under light stirring. The first formulation contained a TiO2 slurry and a calcium carbonate (CaCO3) slurry, for opacification (Comp. Example 14), while the second formulation contained a fixed base-swollen hollow sphere polymer, Ropaque™ Ultra E (manufactured by Rohm and Haas Company, located in Philadelphia, Pennsylvania), and a CaCO3 slurry, for opacification (Example 15). The CaCO3 and TiO2 slurries, whose compositions are listed below, were prepared by dispersing with a Cowles disperser for 15 minutes.

**Table 6.**

| **CaCO3 Slurry** | **Weight %** |
|---|---|
| Socal™ P2 (manufactured by Solvay Chemicals, located in Brussels, Belgium) | 60 |
| Orotan™ N 4000 (manufactured by Rohm and Haas Company, located in Philadelphia, Pennsylvania) | 1 |
| Foammaster™ NDW (manufactured by Cognis, located in Dusseldorf , germany) | 0.2 |
| Natrosol™ 250 HBR (manufactured by Hercules, Aqualon Division, located in Rijswijk, the Netherlands) | 0.2 |
| Water | 38.6 |

**Table 7.**

| **TiO2Slurry** | **Weight %** |
|---|---|
| Tioxide™ TR-92 (manufactured by Huntsman Tioxide, located in Billingham, United Kingdom) | 73 |
| Orotan™ N 4000 | 0.7 |
| Foammaster™ NDW | 0.2 |
| Ammonia at 28% | 0.1 |
| Natrosol™ 250 HBR | 0.2 |
| Water | 26 |

The two formulations were applied via screen printing, using a 125 mesh, on a brown cotton substrate, and then cured at 150°C for 3 minutes, in a Werner Mathis forced air circulation oven. These samples were then subjected to 3 cycles of washing machine (40°C) and tumble drier to evaluate the washing resistance. After 3 cycles, the degradation of the samples was visually equivalent. The L , a , b colour coordinates were measured before, and after washing, to verify any colour change.

**Table 8.**

| | **Raw Material** | **Comp. Example 14** | **Example 15** |
|---|---|---|---|
| | | **(g)** | **(g)** |
| | TiO2 slurry at 73% | 32.9 | 22.6 |
| | Primal™ ECO 36 | 16 | 16.5 |
| | CaCO3 slurry | 3.1 | 0 |
| | Ropaque™ Ultra E | 0 | 8.3 |
| | Water | 114.8 | 116.2 |
| | Concentrate 476 | 4.2 | 4 |
| | (manufactured by Rohm and Haas Company, located in Philadelphia Pennsylvania). | | |
| | Total weight | 171 | 167.6 |

| **Initial Values:** | | | |
|---|---|---|---|
| | L | 80.73 | 77.768 |
| | a | 1.68 | 2.47 |
| | b | 1.56 | 2.19 |

| **Final Values (3 cycles):** | | | |
|---|---|---|---|
| | L | 72.05 | 74.20 |
| | a | 4.2 | 3.41 |
| | b | 5.78 | 4.56 |

| | | | |
|---|---|---|---|
| NOTE: Primal™ ECO 36 is a binder manufactured by Rohm and Haas Company, located in Philadelphia, Pennsylvania. | | | |

The results demonstrate that the colour fastness of the white pigment printing formulation with a fixed base-swollen hollow sphere polymer is as good as a standard formulation using only TiO2 and CaCO3.

### Examples 16-17

The formulations of Comp. Example 14, and Example 15 were applied on black and white paper Leneta cards, using a drawdown bar with a 200µ blade opening. The cards were dried in the oven for 3 minutes at 60°C and 150°C, to verify that there was no significant opacity loss at curing temperatures. To determine opacity. the reflectance over the white and black parts of the substrate were measured using a Byk Gardner reflectometer (angle 45/0), and the ratio of reflectance over black to white was calculated (contrast ratio)

**Table 9.**

| | **Comp. Example 16** | **Reference Example 17** |
|---|---|---|
| Sample tested: | Comp. Eg. 14 formulation | Eg. 15 formulation |
| Contrast ratio at 60°C | 89.6 | 90.9 |
| Contrast ratio at 150°C | 89.5 | 89.9 |
| | | |

The results demonstrate that no significant loss of opacity occurred at 150°C. The benefit is lower formulated cost than the standard pigment printing reference formulation.

## Claims

1. A method of using a heat resistant hollow sphere polymer for imparting lightness, brightness or opacity to substrate, comprising:
(a) providing a composition comprising a dispersion of hollow sphere polymers, wherein said hollow sphere polymer has a core stage that has been swollen by a fixed or permanent base, and
(b) contacting said composition containing said hollow sphere polymer with a woven or nonwoven substrate; and
(c) exposing said composition containing said hollow sphere polymer to temperatures of from 100°C to 350°C.

2. The method of claim 1, wherein said dispersion has an amine titer, as determined by the F Method, of less than 0.2meq/g solid.

3. The method of claim 1, wherein said hollow sphere polymer is crosslinked.

4. The method of claim 3, wherein said crosslinking is at a level of from at least 2 mole percent, based on total mole of monomer in said hollow sphere polymer.

5. The method of claim 1, wherein any amine in said composition is added during formation of said hollow sphere polymer.

6. The method according to claim 1, wherein said hollow sphere polymer is made by:
i. forming a core stage polymer by polymerizing at least one mono-ethylenically unsaturated monomer containing acid functionality,
ii. encapsulating said core stage polymer with at least one shell stage polymer, by emulsion polymerizing at least one shell stage monomer system in the presence of said core stage polymer,
wherein said shell stage polymer permits penetration of a fixed or permanent base,
iii. contacting the resulting multi-stage polymer particles with fixed or permanent base,
wherein either (1) said shell stage polymer comprises at least 1% acid functional monomer, or (2) said contacting takes place in the presence of solvent.

7. The method, according to claim 6, wherein said core stage polymer is formed by polymerizing from 5% by weight to 100% by weight, based on the total weight of core stage polymer, of said mono-ethylenically unsaturated monomer containing acid functionality, and from 0% by weight to 95% by weight, based on the total weight of core stage polymer, of at least one nonionic mono-ethylenically unsaturated monomer; and
wherein said shell stage polymer is formed by polymerizing from 90% by weight to 99.9% by weight, based on the total weight of shell stage polymer, of at least one nonionic mono-ethylenically unsaturated monomer, and from 0.1 % by weight to 10% by weight, based on the total weight of shell stage polymer, of an acid-functional mono-ethylenically unsaturated monomer.

## Patentansprüche

1. Ein Verfahren zur Verwendung eines wärmebeständigen Hohlkugelpolymers zum Verleihen von Leichtigkeit, Helligkeit oder Deckkraft an ein Substrat, Folgendes beinhaltend:
(a) Bereitstellen einer Zusammensetzung, die eine Dispersion von Hohlkugelpolymeren beinhaltet, wobei das Hohlkugelpolymer eine Kernstufe aufweist, die durch eine feste oder dauerhafte Base gequollen wurde, und
(b) In-Kontakt-Bringen der Zusammensetzung, die das Hohlkugelpolymer enthält, mit einem gewebten oder nicht gewebten Substrat; und
(c) Aussetzen der Zusammensetzung, die das Hohlkugelpolymer enthält, gegenüber Temperaturen von 100 °C bis 350 °C.

2. Verfahren gemäß Anspruch 1, wobei die Dispersion einen Amin-Titer, wie durch das F-Verfahren bestimmt, von weniger als 0,2 mÄqu./g Feststoff aufweist.

3. Verfahren gemäß Anspruch 1, wobei das Hohlkugelpolymer vernetzt ist.

4. Verfahren gemäß Anspruch 3, wobei die Vernetzung in einem Anteil von von mindestens 2 Molprozent, bezogen auf Gesamtmol an Monomer in dem Hohlkugelpolymer, vorliegt.

5. Verfahren gemäß Anspruch 1, wobei ein beliebiges Amin in der Zusammensetzung während der Bildung des Hohlkugelpolymers zugegeben wird.

6. Verfahren gemäß Anspruch 1, wobei das Hohlkugelpolymer folgendermaßen hergestellt wird:
i. Bilden eines Kernstufenpolymers durch Polymerisieren mindestens eines monoethylenisch ungesättigten Monomers, das eine Säurefunktionalität enthält,
ii. Verkapseln des Kernstufenpolymers mit mindestens einem Schalenstufenpolymer durch Emulsionspolymerisieren mindestens eines Schalenstufenmonomersystems in Gegenwart des Kernstufenpolymers, wobei das Schalenstufenpolymer Eindringen einer festen oder permanenten Base ermöglicht,
iii. In-Kontakt-Bringen der erhaltenen Mehrstufenpolymerteilchen mit fester oder permanenter Base,
wobei entweder (1) das Schalenstufenpolymer mindestens 1 % säurefunktionelles Monomer beinhaltet oder (2) das In-Kontakt-Bringen in Gegenwart eines Lösungsmittels erfolgt.

7. Verfahren gemäß Anspruch 6, wobei das Kernstufenpolymer durch Polymerisieren von 5 Gew.-% bis 100 Gew.-%, bezogen auf das Gesamtgewicht des Kernstufenpolymers, des monoethylenisch ungesättigten Monomers, das Säurefunktionalität enthält, und von 0 Gew.% bis 95 Gew.-%, bezogen auf das Gesamtgewicht des Kernstufenpolymers, mindestens eines nichtionischen monoethylenisch ungesättigten Monomers gebildet wird; und
wobei das Schalenstufenpolymer durch Polymerisieren von 90 Gew.-% bis 99,9 Gew.-%, bezogen auf das Gesamtgewicht des Schalenstufenpolymers, mindestens eines nichtionischen monoethylenisch ungesättigten Monomers und von 0,1 Gew.-% bis 10 Gew.-% , bezogen auf das Gesamtgewicht des Schalenstufenpolymers, eines säurefunktionellen monoethylenisch ungesättigten Monomers gebildet wird.

## Revendications

1. Un procédé d'utilisation d'un polymère à sphère creuse résistant à la chaleur pour conférer clarté, luminosité ou opacité à un substrat, comprenant :
(a) fournir une composition comprenant une dispersion de polymères à sphère creuse, ledit polymère à sphère creuse ayant une zone de coeur qui a été gonflée par une base fixe ou permanente, et
(b) mettre en contact ladite composition contenant ledit polymère à sphère creuse avec un substrat tissé ou non tissé ; et
(c) exposer ladite composition contenant ledit polymère à sphère creuse à des températures allant de 100 °C à 350 °C.

2. Le procédé de la revendication 1, dans lequel ladite dispersion a un titre d'amine, tel que déterminé par le procédé F, inférieur à 0,2 meq/g de solide.

3. Le procédé de la revendication 1, dans lequel ledit polymère à sphère creuse est réticulé.

4. Le procédé de la revendication 3, dans lequel ladite réticulation est à un niveau d'au moins 2 pour cent molaire, rapporté au mole total de monomère dans ledit polymère à sphère creuse.

5. Le procédé de la revendication 1, dans lequel toute amine dans ladite composition est ajoutée lors de la formation dudit polymère à sphère creuse.

6. Le procédé selon la revendication 1, dans lequel ledit polymère à sphère creuse est réalisé :
i. en formant un polymère de zone de coeur en polymérisant au moins un monomère mono-éthylénique insaturé contenant une fonctionnalité acide,
ii. en encapsulant ledit polymère de zone de coeur avec au moins un polymère de zone de coque, en polymérisant en émulsion au moins un système de monomère de zone de coque en présence dudit polymère de zone de coeur,
ledit polymère de zone de coque permettant la pénétration d'une base fixe ou permanente,
iii. en mettant en contact les particules de polymère multi-zone résultantes avec une base fixe ou permanente,
dans lequel soit (1) ledit polymère de zone de coque comprend au moins 1 % de monomère à fonctionnalité acide, soit (2) ladite mise en contact a lieu en présence de solvant.

7. Le procédé, selon la revendication 6, dans lequel ledit polymère de zone de coeur est formé en polymérisant de 5 % en poids à 100 % en poids, rapporté au poids total de polymère de zone de coeur, dudit monomère mono-éthylénique insaturé contenant une fonctionnalité acide, et de 0 % en poids à 95 % en poids, rapporté au poids total de polymère de zone de coeur, d'au moins un monomère mono-éthylénique insaturé non ionique ; et
dans lequel ledit polymère de zone de coque est formé en polymérisant de 90 % en poids à 99,9 % en poids, rapporté au poids total de polymère de zone de coque, d'au moins un monomère mono-éthylénique insaturé non ionique, et de 0,1 % en poids à 10 % en poids, rapporté au poids total de polymère de zone de coque, d'un monomère mono-éthylénique insaturé à fonctionnalité acide.
